Europäisches Patentamt

European Patent Office

Office européen des brevets

(11) Publication number: **0 201 898**
**B1**

(19)

# EUROPEAN PATENT SPECIFICATION

(12)

(45) Date of publication of the patent specification:
06.09.89

(51) Int. Cl.⁴: **A 01 F  15/00**, **A 01 D  75/18**,
**B 65 G  45/00**

(21) Application number: **86106416.0**

(22) Date of filing: **12.05.86**

(54) **Baling machine.**

(30) Priority: **13.05.85  GB 8512087**

(43) Date of publication of application:
**20.11.86 Bulletin 86/47**

(45) Publication of the grant of the patent:
**06.09.89 Bulletin 89/36**

(84) Designated Contracting States:
**DE FR GB IT NL**

(56) References cited:
**EP-A- 0 152 085**
**GB-A- 2 023 525**
**US-A- 4 436 027**

(73) Proprietor: **DEERE & COMPANY, 1 John Deere Road,
Moline Illinois 61265 (US)**

(72) Inventor: **Geiser, Jens, Hohlstrasse 12,
D-6660 Zweibrücken (DE)**
Inventor: **Viaud, Jean, 16, Rue de l'Ecole,
F-57200 Sarreguemines (FR)**

(74) Representative: **Collins, Geoffrey Stainton et al, c/o
Reddie & Grose 16 Theobalds Road, London WC1X 8PL
(GB)**

## Description

This invention relates to a machine for harvesting crop having rotatable rolls for moving the crop, a said roll having a scraper assembly which has a scraper for preventing the crop being carried round the roll. The machine can be a baling machine, for forming cylindrical bales of crop, having a main frame on which the rolls are mounted to provide a baling chamber for the crop.

Machines, towed by a tractor, for forming large cylindrical bales of hay (so called «round» balers) are well known. As the machine advances, the crop is removed from a windrow by a pick-up mechanism and delivered rearwardly to a baling chamber where it is rolled into a bale between sets of oppositely moving belts, the growing bale rotating about a horizontal axis and the baling chamber expanding with the bale. The belts are trained over rolls which extend laterally of the machine and most of which are journalled at either end in the sides of the machine.

During baling, stray crop can become entrapped in the region between the sides of the baler, the outermost belts and the rolls, whereupon the crop tends to wrap round the roll ends which can be detrimental to belt tracking on the rolls . The crop can also find its way into the bearings of the rolls and foul them.

In our EP-A-70 537 we have described and claimed a baling machine which is designed to obviate the wrapping of crop along the length of a roll. In one arrangement described, an additional roll is provided over which the belts are alternately trained to give a staggered array with openings between the belts enabling stray crop to escape.

It is also known, e.g. from US-A-4 155 298, to provide a scraper along the length of a roll in very close proximity to the roll surface to scrape off the wrapping crop.

In our EP-A-152 085 we have described and claimed an invention which reduces the problem of crop wrapping round rolls and is particularly useful when used to protect the ends of the rolls. It can be employed in conjunction with the invention of EP-A-70 537 or independently.

According to the invention of EP-A152 085 the scraper assembly includes an elongated member rigid with the roll and extending along it, the scraper being in contact with the member or closely spaced therefrom. The elongated element, which is preferably in the form of a spiral for moving the crop along the roll, can be machined more easily with greater accuracy than the roll.

The present invention enables wrapping or build-up of crop at the scraper which may still be experienced in wet difficult conditions to be reduced further.

According to the present invention the scraper assembly includes an auger disposed adjacent the scraper so as to move crop away from the scraper.

Preferably the auger is drivable by way of frictional contact with one of the rolls. Desirably the scraper assembly includes an elongated member rigid with the said roll which has the assembly.

The member, can be formed from rod, e.g. as a spiral.

A scraper assembly can be provided at both end regions of the roll in the vicinity of bearings therefor. If each assembly is provided with a spiral, then the spirals are of opposite hand to move crop inwardly away from the bearings.

In a further aspect of the present inventive concept a roll assembly, for a harvesting machine having rotatable rolls for moving the crop, e.g. a baling machine for forming cylindrical bales of crop, comprises a roll having a said scraper assembly or assemblies.

Existing baling machines can be modified by replacing appropriate original rolls with new rolls having a scraper assembly or assemblies.

The invention is applicable to «round» balers of the belt-type (in which belts contact the crop and are trained over the rolls) and of the roll-type (in which the rolls contact the crop direct). The invention can also be applied to a forage harvester.

Embodiment of the invention will now be described with reference to the accompanying diagrammatic drawings in which:

Figure 1 is an elevational view of the right hand side (considered when facing the direction of advancement) of a baling machine for forming large cylindrcal bales of hay or straw showing in broken lines the disposition of the transverse rolls and belts trained round the rolls within the machine, and also a scraper assembly associated with a lower foremost roll;

Figure 2 is an elevational view similar to Figure 1, but with the right hand side of the machine removed;

Figure 3 is an elevational view from the left of the forward end of the machine showing scraper assemblies at the end portions of the lower foremost roll in Figure 1;

Figure 4 is an elevational view of the right hand scraper assembly of Figure 3.

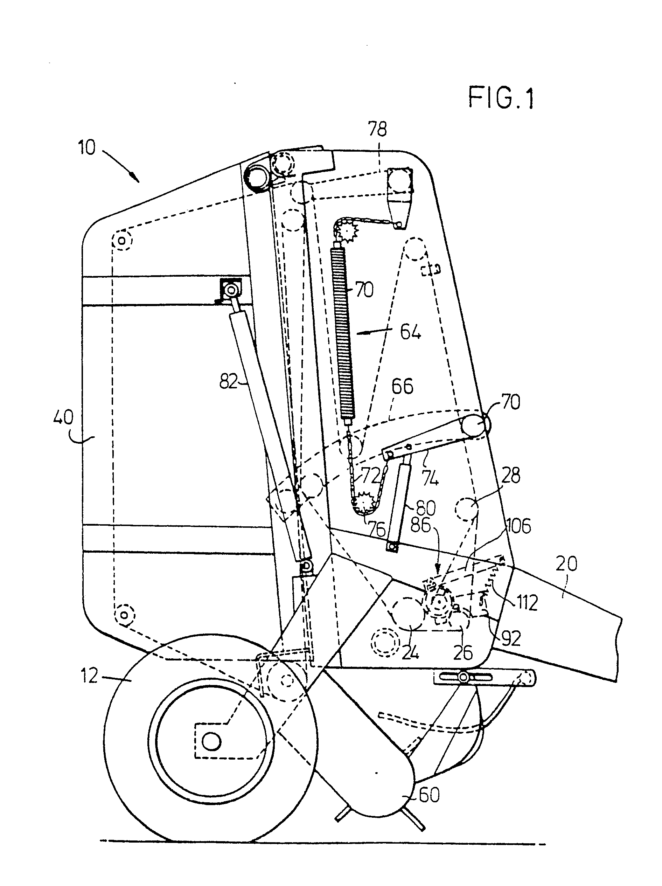

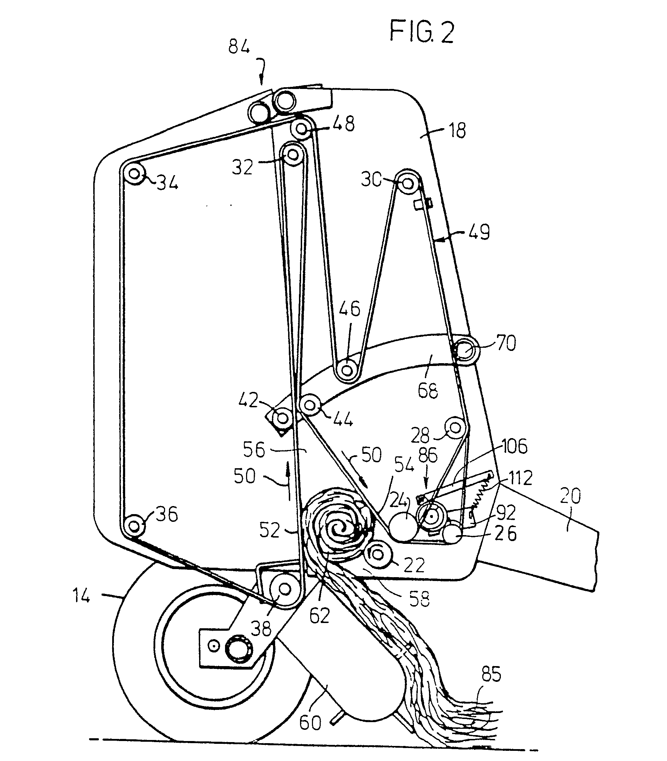

In the drawings (and particularly in Figures 1 and 2), the machine includes a main frame 10 mounted on a pair of wheels 12, 14. The main frame 10 has a pair of upright, opposite, fore-and-aft extending right and left side walls 16, 18 connected by transverse beams. A draft tongue 20 is rigid with a cross beam 21 at the front of the frame 10 and extends forwardly for attaching the baler to a tractor (not shown) which draws the machine.

A plurality of lateral rolls, shown in broken lines in Figure 1 and in full lines in Figure 2, extends over the width of the machine. One set of rolls 22, 24, 26, 28, 30, 32 ist journalled in a forward fixed position of either side wall, whilst a further set constituted by rolls 34, 36, 38 is journalled in a rearward swingable gate portion 40 of the side walls. There is also a pair of chamber restricting rolls 42, 44, and take-up and tensioning rolls 46, 48.

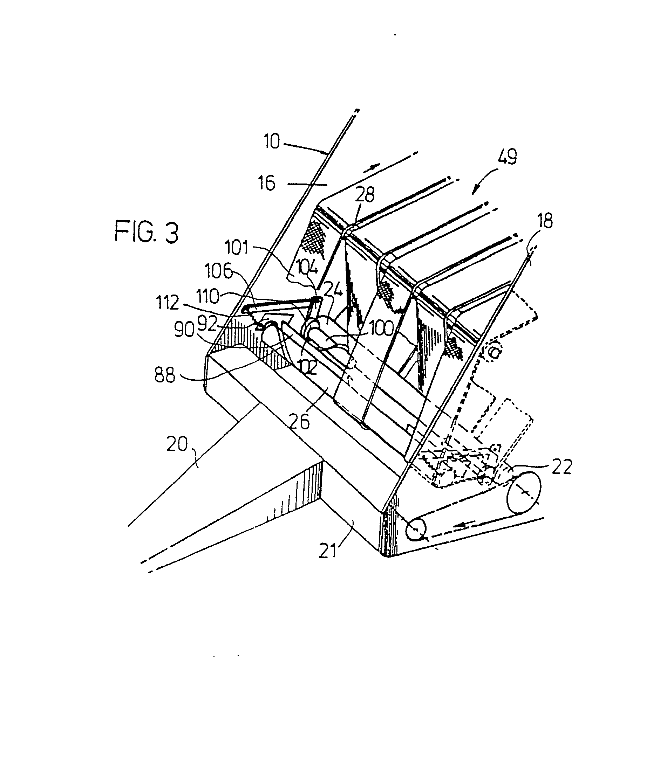

Five rubber belts 49 are trained side-by-side over the rolls, with the exception of the roll 22 which acts as a stripper roll, to provide the configuration shown in Figures 1 and 2 and they move in the direction indicated by arrows 50, the stripper roll 22 being driven anti-clock-wise as viewed in the two Figures. However, as shown in Figure 3, alternate belts only are trained over the lower foremost roll 26, whilst the remaining belts by-pass the roll 26 and run directly between the roll 24, which is at the same horizontal level as the roll 26, and the roll 28 above. This creates, as explained and claimed in our aforesaid EP-A-70 537, a staggered array of belts affording the release of stray crop through gaps, formed as a result of the staggering, between neighbouring belts. Upwardly extending runs 52, 54 of the belts provide with the side walls a bale-forming chamber 56 which has an inlet 58 for crop received from a pick-up 60 beneath it.

In order to accommodate the increasing diameter of a growing bale core 62 in the bale-forming chamber 56, the size of the chamber must also increase and a belt take-up and tensioning mechanism 64 is provided for this purpose at either side of the machine. These mechanisms include: a pair of arms 66, 68 which are mounted on a horizontal transverse pivot shaft 70 at the forward end of the main frame 10; the take-up and tensioning roll 46 which is supported at either end at an intermediate location on the arms 66, 68; and the pair of chamber restricting rolls 42, 44 supported at the free end of the arms. The arms are biased in an anti-clockwise direction by a pair of springs one on either side of the main frame 10 of which just the right hand spring 70 is shown and only its arrangement will be described, the other being similar. The spring 70 acts through a chain 72, at its lower end, on a bias arm 74 connected rigidly to the pivot shaft 70, the chain 72 being trained over a sprocket 76. At its upper end a further chain similarly connects the spring 70 to one end of a bell crank 78, and the other end of the bell crank bears one end of the take-up and tensioning roll 48. The bias arm 74 is also restrained by a piston and cylinder unit 80 pivotally connected at one end to the free end of the bias arm 74 and at the other to the associated right hand side wall 16 of the main frame 10. A similar arrangement is provided on the left hand side of the machine so that, for example, the roll 48 is carried by bell cranks on either side.

The rear gate portion 40 is movable by a pair of upwardly extending hydraulic piston and cylinder units on either side of the main frame 10 of which only a right hand unit 82 is shown which is pivotally connected at its lower end to the forward fixed portion of the side wall 16 and at its upper end to the gate portion 40 which is wingable upwardly and downwardly about a pivot arrangement 84 at its upper forward region.

In operation, crop lying in a windrow 85 is lifted and conveyed to the baling chamber 56 where the oppositely moving runs 52, 54 of the belts, aided by the stripper roll 22, cause the crop to turn clockwise (as viewed in Figures 1 and 2) to form the bale core 62 of increasing size which eventually overcomes the tension in the belts brought about by the tensioning mechanisms, and the arms 66, 68 consequently swing upwardly and thus the chamber 56 increases in size to accommodate as necessary the bale core 62 as its diameter grows.

During baling, crop sometimes finds its way past the edges of the belts of the runs 52, 54 to the exterior of the bale chamber 56. Much stray crop forward of the baling chamber tends to escape due to the staggered array of belts as mentioned above, but some crop can nevertheless sometimes wrap round the roll 26 at its ends where it can be ingested into bearing of the roll or cause problems in belt tracking. The difficulties are exacerbated if the crop is wet.

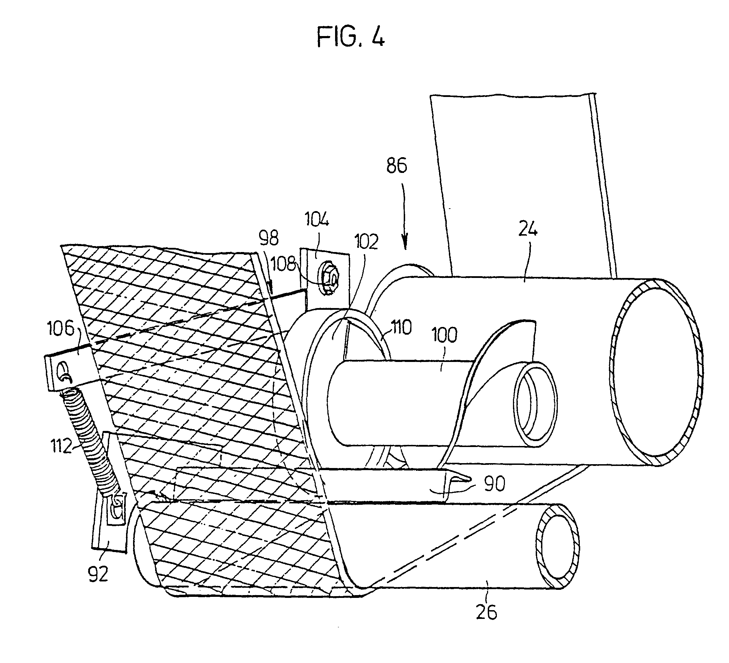

In order to reduce wrapping of crop at the ends of the roll 26 a scraper assembly 86 is provided at the right hand end of the roll 26, a corresponding assembly 86 being located at the other end. The right hand assembly 86 illustrated includes (as shown in Figures 3 and 4) a scraper 90, and a mounting plate 92 for the scraper. The mounting plate 92 has a semi-circular bite taken from its lower side to accommodate the cylindrical surface of the roll 26 so that the plate straddles the roll, and it is apertured to receive the shanks of two adjustment bolts (not shown) which secure it to the inside face of the right side wall 16. The scraper 90 which has a cross-section in the form of an inverted «V» is welded to, and runs at right angles from, the plate 92 and extends horizontally over the upper surface of the right hand end portion of the roll 26. The scraper mounting plate 92 is adjusted on the wall 16 to bring the leading leg of the inverted V of the scraper into light contact, or just out of contact, with the roll 26.

Each scraper assembly 86 also includes an auger arrangement 98 which has an auger 100 between the rolls 24, and 26, a drive wheel 102 rigid with the auger 100, a swingabel support arm 104 for the auger and wheel, and a spring loaded lever 106 rigid with the arm 104. In more detail, the support arm 104 is pivotally mounted at its upper end on bolt pin 108 extending through the right side wall 16 and carries at its lower end in cantilever fashion the auger 100 and the wheel 102 so that they can rotate freely. The wheel 102 has a friction layer of rubber 110 at its surface. The lever 106 extends approximately horizontally from the arm 104 just below the pin 108, and at its free end it is attached to a spring 112 anchored to the mounting plate 92 below. Thus the spring 112 holds the drive wheel 102 in firm frictional driving conctact via the layer 110 with the roll 24.

As indicated above the scraper assemblies 68 at the left and right hand ends of the roll 26 correspond, but the augers 100 are of opposite hand. The scraper assemblies 86 operate by conveying any stray crop tending to wrap round the end portion of the roll 26 away from the end. Specifically the scrapers 90 serve to prevent crop being carried round by the roll. The augers 100 are so disposed relative to the scrapers 90 and are of such a hand that they move any crop, tending to accumulate in the region of the scrapers, away from the scrapers in an inward direction. At the exit ends of the augers 100 the crop is free to fall through the gap between neighbouring belts.

Instead of two separate augers 100 being provided for the roll 26 a single auger, driven either at one end only or both ends, may be used, the auger flights being of opposite hand at the end portions of the auger. The scraper can also extend over the full length of the roll.

Although the scraper assemblies 86 have been described as being located at the end regions of the roll 26, they can alternatively or in addition be provided for other rolls wherever wrapping is likely and where the unwanted stray crop can be moved away from the site of wrapping.

In our co-pending European patent application 86 106 417 which has the same priority date as the present application, we have described and claimed a machine for harvesting crop having rotatable rolls for moving the crop, a said roll having a scraper assembly comprising a scraper for preventing the crop being carried round the roll characterised in that the scraper assembly includes an elongated member rigid with the roll and extending along it, the scraper being in contact with the member or closely spaced therefrom, and an auger disposed adjacent the scraper so as to move crop away from the scraper.

Furthermore, in our co-pending European patent application 86 106 415 which has the same priority date as the present application we have described and claimed a baling machine for forming cylindrical bales of crop having a frame, rotatable rolls mounted thereon and driven from a drive, and belts trained over the rolls to provide a baling chamber for the crop, a said roll having a scraper assembly comprising a scraper for preventing the crop being carried round the roll characterised in that the scraper assembly includes an auger disposed adjacent the scraper so as to move crop away from the scraper, the auger being drivable from the drive for the rolls.

**Claims**

1. A machine for harvesting crop having rotatable rolls for moving the crop, a said roll (26) having a scraper assembly (86) comprising a scraper (90) for preventing the crop being carried round the roll characterised in that the scraper assembly (86) includes an auger (100) disposed adjacent the scraper (90) so as to move crop away from the scraper.

2. A machine according to claim 1 characterised in that the auger (100) is drivable by way of frictional contact with one (24) of the rolls.

3. A machine according to claim 2 characterised in that the auger (100) is rigid with a drive wheel (102) in friction driving contact with the said one (24) of the rolls.

4. A machine according to claim 3 characterised in that the drive wheel (102) is mounted on a swingable arm (104) which is spring loaded (112) into contact with the said one (24) of the rolls.

5. A machine according to any preceding claim characterised in that the machine is a baling machine for forming cylindrical bales of crop having a main frame (10) on which the rolls (e.g. 24, 26) are mounted to provide a baling chamber (56) for the crop.

6. A machine according to any preceding claim characterised in that the auger (100) extends along substantially the full length of the roll (26), the end portions of the auger being of opposite hand.

7. A machine according to claim 6 characterised in that the scraper (90) extends along substantially the full length of the roll (26).

8. A machine according to any of claims 1 to 5 characterised in that a said scraper assembly (86) is provided at both end regions of the roll (26) in the vicinity of bearings therefor.

9. A machine according to any preceding claim characterised in that a plurality of rolls is provided with a plurality of scraper assemblies (86).

10. A machine according to any preceding claim characterised in that the scraper (90) is adjustable.

11. A machine according to claim 5 or claim 5 and any of claims 6 to 10 characterised in that the said roll (26) is the lower foremost roll of the baling machine.

12. A machine according to claim 1 characterised in that the machine is a forage harvester.

13. A roll assembly, for a machine for harvesting crop, comprising a roll (26) for moving the crop and a scraper assembly (86) comprising a scraper (90) for preventing crop being carried round the roll characterised in that the scraper assembly (86) includes an auger (100) for moving crop away from the scraper (90).

14. A roll assembly according to claim 13 characterised in that the auger (100) is adapted to be drivable by way of frictional contact with a roll (24) of the machine.

15. A roll assembly according to claim 14 characterised in that the auger (100) is rigid with a drive wheel (102) adapted for friction driving contact with a roll (24) of the machine.

16. A roll assembly according to any of claims 13 to 15 characterised in that a said scraper assembly (86) is provided for both end regions of the said roll (26) for moving the crop.

17. A roll assembly according to any of claims 13 to 16 characterised in that the scraper (90) is attached to an adjustable mounting plate (92), the mounting plate being adapted for attachment to a frame (10) of the harvesting machine.

**Patentansprüche**

1. Maschine zum Ernten von Erntegut mit drehbaren Rollen zum Bewegen des Erntegutes, von denen eine Rolle (26) eine Schabereinrichtung aufweist, welche einen Schaber (90) umfasst, der verhindert, dass das Erntegut um die Rolle mitgenommen wird, dadurch gekennzeichnet, dass die Schabereinrichtung (86) eine Schnecke (100) umfasst, die nahe dem Schaber (90) angeordnet ist, so dass sie das Erntegut von dem Schaber wegbewegt.

2. Maschine nach Anspruch 1, dadurch gekennzeichnet, dass die Schnecke (100) durch Reibungskontakt mit einer (24) der Rollen durch Reibung antreibbar ist.

3. Maschine nach Anspruch 2, dadurch gekennzeichnet, dass die Schnecke (100) starr mit einem Antriebsrad (102) ausgebildet ist, das in Reibungsantriebskontakt mit der genannten einen (24) der Rollen steht.

4. Maschine nach Anspruch 3, dadurch gekennzeichnet, dass das Antriebsrad (102) auf einem schwenkbaren Arm (104) montiert ist, der unter Federvorspannung (112) in Kontakt mit der genannten einen (24) der Rollen vorgespannt ist.

5. Maschine nach irgendeinem der voranstehenden Ansprüche, dadurch gekennzeichnet, dass die Maschine eine Rundballenpresse zum Bilden von runden Ballen aus dem Erntegut ist, welche einen Hauptrahmen (10) aufweist, auf dem die Rollen (z.B. 24, 26) montiert sind, um eine Ballenformkammer (56) für das Erntegut zu bilden.

6. Maschine nach irgendeinem der voranstehenden Ansprüche, dadurch gekennzeichnet, dass die Schnecke (100) sich im wesentlichen entlang der vollen Länge der Rolle (26) erstreckt, wobei die Endabschnitte der Schnecke entgegengesetzte Steigung aufweisen.

7. Maschine nach Anspruch 6, dadurch gekennzeichnet, dass der Schaber (90) sich im wesentlichen entlang der vollen Länge der Rolle (26) erstreckt.

8. Maschine nach irgendeinem der Ansprüche 1 bis 5, dadurch gekennzeichnet, dass eine genannte Schaberanordnung (86) an beiden Endbereichen der Rolle (26) in der Nähe von deren Lager angeordnet ist.

9. Maschine nach irgendeinem der voranstehenden Ansprüche, dadurch gekennzeichnet, dass eine Mehrzahl von Rollen zusammen mit einer Mehrzahl von Schaberanordnungen (86) vorgesehen ist.

10. Maschine nach irgendeinem der voranstehenden Ansprüche, dadurch gekennzeichnet, dass der Schaber (90) einstellbar ist.

11. Maschine nach Anspruch 5 oder Anspruch 5 und irgendeinem der Ansprüche 6 bis 10, dadurch gekennzeichnet, dass die genannte Rolle (26) die am weitesten unten liegende Rolle der Rundballenpresse ist.

12. Maschine nach Anspruch 1, dadurch gekennzeichnet, dass die Maschine eine Futtererntemaschine ist.

13. Rollenanordnung für eine Maschine zum Ernten von Erntegut, mit einer Rolle (26) zum Bewegen des Erntegutes und einer Schaberanordnung (86), welche einen Schaber (90) aufweist, um das Mitführen des Erntegutes um die Rolle zu verhindern, dadurch gekennzeichnet, dass die Schaberanordnung (86) eine Schnecke (100) umfasst, um das Erntegut von dem Schaber (90) wegzubewegen.

14. Rollenanordnung nach Anspruch 13, dadurch gekennzeichnet, dass die Schnecke (100) so angepasst ist, dass sie durch Reibungskontakt mit einer Rolle (24) der Maschine antreibbar ist.

15. Rollenanordnung nach Anspruch 14, dadurch gekennzeichnet, dass die Schnecke starr mit einem Antriebsrad (102) verbunden ist, das so angepasst ist, dass es mit einer Rolle (24) der Maschine in Reibungsantriebskontakt treten kann.

16. Rollenanordnung nach irgendeinem der Ansprüche 13 bis 15, dadurch gekennzeichnet, dass eine genannte Schaberanordnung (86) für beide Endbereiche der genannten Rolle (26) zum Bewegen des Erntegutes vorgesehen ist.

17. Rollenanordnung nach irgendeinem der Ansprüche 13 bis 16, dadurch gekennzeichnet, dass der Schaber (90) an einer einstellbaren Montageplatte (92) montiert ist, wobei die Montageplatte so angepasst ist, dass sie an einem Rahmen (10) der Erntemaschine angebracht werden kann.

**Revendications**

1. Moissonneuse comportant des cylindres rotatifs servant à déplacer la récolte, l'un de ces cylindres (26) comportant un ensemble à racle (86) comprenant une racle (90) empêchant la récolte d'être entraînée autour du cylindre, caractérisée en ce que l'ensemble à racle (86) comporte une vis convoyeuse (100) disposée au voisinage de la racle (90) de manière entraîner la récolte à partir de la racle.

2. Machine selon la revendication 1, caractérisée en ce que la vis convoyeuse (100) peut être entraînée par l'intermédiaire d'un contact par frottement avec l'un (24) des cylindres.

3. Machine selon la revendication 2, caractérisée en ce que la vis convoyeuse (100) est solidaire d'une roue d'entraînement (102), qui établit un contact d'entraînement par frottement avec ledit cylindre (24).

4. Machine selon la revendication 3, caractérisée en ce que la roue d'entraînement (102) est montée sur un bras oscillant (104) qui est sollicité (112) par un ressort de manière à être en contact avec ledit cylindre (24).

5. Machine selon l'une quelconque des revendications précédentes, caractérisé en ce qu'il s'agit d'une machine à former des balles cylindriques d'une récolte, comportant un châssis principal (10), sur lequel les cylindres (par exemple 24, 26) sont montés de manière à former une chambre (56) de mise en balles de la récolte.

6. Machine selon l'une quelconque des revendications précédentes, caractérisée en ce que la vis convoyeuse (100) s'étend sensiblement sur toute la longueur du cylindre (26), les parties d'extrémité de la vis convoyeuse étant de sens opposés.

7. Machine selon la revendication 6, caractérisée en ce que la racle (90) s'étend sensiblement sur toute la longueur du cylindre (26).

8. Machine selon l'une quelconque des revendications 1 à 5, caractérisée en ce que ledit ensemble à racle (86) est prévu au niveau des deux zones d'extrémité du cylindre (26), au voisinage des paliers de ce cylindre.

9. Machine selon l'une quelconque des revendications précédentes, caractérisée en ce que ladite pluralité de cylindres est équipée d'ensemble à racle (86).

10. Machine selon l'une quelconque des revendications précédentes, caractérisée en ce que la racle (90) est ajustable.

11. Machine selon la revendication 5 ou selon la revendication 5 et l'une quelconque des revendications 6 à 10, caractérisée en ce que ledit cylindre (26) est le cylindre inférieur, situé le plus en avant, de la machine à former les balles.

12. Machine selon la revendication 1, caractérisée en ce qu'il s'agit d'une ramasseuse-chargeuse.

13. Ensemble de cylindres, pour une moisssonneuse, comprenant un cylindre (26) servant à déplacer la récolte et un ensemble à racle (86) comprenant une racle (90) servant à empêcher la récolte d'être entraînée autour du cylindre, caractérisé en ce que l'ensemble à racle (86) comporte une vis convoyeuse (100) disposée au voisinage de la racle (90) de manière à entraîner la récolte à partir de la racle (90).

14. Ensemble de cylindres selon la revendication 13, caractérisé en ce que la vis convoyeuse (100) est adaptée de manière à pouvoir être entraînée par l'intermédiaire d'un contact à frottement avec un cylindre (24) de la machine.

15. Ensemble de cylindres selon la revendication 14, caractérisé en ce que la vis convoyeuse (100) est solidaire d'une roue d'entraînement (102) adaptée pour établir un contact d'entraînement par frottement avec un cylindre (24) de la machine.

16. Ensemble de cylindres selon l'une quelconque des revendications 13 à 15, caractérisé en ce que ledit ensemble à racle (86) est prévu dans les deux zones d'extrémité dudit cylindre (26) pour entraîner la récolte.

17. Ensemble de cylindres selon l'une quelconque des revendications 13 à 16, caractérisé en ce que la racle (90) est fixée à une plaque de montage ajustable (92), cette plaque de montage étant adaptée pour être fixée à un châssis (10) de la moissonneuse.

1/4

FIG.1

2/4

FIG. 2

3/4

FIG. 3

4/4

FIG. 4